# EUROPÄISCHE PATENTSCHRIFT

(11) **EP 1 216 813 B1**
(45) Veröffentlichungstag und Bekanntmachung des Hinweises auf die Patenterteilung: **09.08.2006**
(21) Anmeldenummer: 01250447.8
(22) Anmeldetag: 20.12.2001
(51) Int. Cl.: B29D 11/00, B29C 45/16, G02B 6/42

(54) **Verfahren zur Herstellung von Lichtleitpfaden in spritzgegossenen Gehäuseteilen**
Process for the manufacture of waveguides in injection moulded parts
Procédé de fabrication de guides optiques dans des pièces moulées par injection

(30) Priorität: 22.12.2000 DE 10065849
(43) Veröffentlichungstag der Anmeldung: 26.06.2002
(73) Patentinhaber: SIEMENS AKTIENGESELLSCHAFT, 80333 München (DE)
(72) Erfinder: Fricke, Dr., Christian, 14050 Berlin (DE); Hartmann, Ulrich, 90562 Kalchreuth (DE)

(56) Entgegenhaltungen:
- DE-A- 4 406 335
- DE-A- 19 826 648
- GB-A- 2 340 959
- US-A- 5 647 034

## Beschreibung

Die Erfindung betrifft die Herstellung von Lichtleitpfaden in spritzgegossenen Gehäuseteilen.

Viele moderne elektronische Geräte arbeiten mit optoelektronischen Bauelementen und optischer Signalübertragung. So sind Leiterplattenaufbauten bekannt, bei denen die Datenübertragung durch optische Wellenleiter erfolgt, siehe Volkel et al, Electronic Letters (1995) vol. 31, no. 3, p. 234-235.

Aus der DE 44 06 335 A1 ist es weiterhin bekannt, eine Leiterplatte mit einer Schicht aus einem optischen Wellenleiter zu versehen, der auf die Leiterplatte aufgebracht wird. Der Wellenleiter selbst wird beidseitig durch Mantelschichten geschützt, wobei an einer bestimmten Stelle beispielsweise durch ein Heißprägewerkzeug eine pyramidenförmige Vertiefung in den Wellenleiter eingebracht werden kann, deren Pyramidenflächen zur Reflektion des durch den Wellenleiter geleiteten Lichtes zur Oberfläche der Leiterplatte dienen kann. Die Öffnung kann mit einem für die Sendewellenlänge des Lichtes transparenten Material ausgefüllt werden, um die Pyramidenflächen zu schützen. Auf der Oberfläche der Leiterplatte können optische Bauelemente platziert werden, die über die durch die Öffnung gebildete Strahlumlenkung mit dem Wellenleiter in optischer Verbindung stehen.

Der Trend zur Miniaturisierung von Elektronik-Bauteilen und zur Integration von mechanischen, optoelektronischen und weiteren Funktionen hat in jüngster Zeit zu Systemen geführt, bei denen auf eine separate Leiterplatte verzichtet wird und die Leiterbahnen direkt in die innenseitige Oberfläche eines Kunststoffgehäuses integriert sind. Nach dem Spritzgießen und dem Konfektionieren der Leiterbahnen wird die Schaltung durch Mikroprozessoren, Sensoren, Schalter etc. komplettiert. Die Schaltung wird ergänzt durch eine äußere Sensorik auf optischer Basis, z. B. Lichtschranken, oder durch Lichtleitung zu beleuchteten Bedienelementen wie Schaltern etc. Es wäre deshalb wünschenswert, in analoger Weise zu elektrischen Leiterbahnen optisch transparente Pfade in dem Gehäuseteil direkt zur Verfügung zu haben und nicht in Form von Lichtleitfasern aufwendig verlegen zu müssen.

Der Erfindung liegt deshalb die Aufgabe zugrunde, ein Verfahren zur Herstellung von Lichtleitpfaden in spritzgegossenen Gehäuseteilen anzugeben.

Erfindungsgemäß wird die Aufgabe gelöst durch die Merkmale des Anspruchs 1. Zweckmäßige Ausgestaltungen sind Gegenstand der Unteransprüche.

Danach wird in einen Gehäuserohling eine optisch transparente Folie, die beidseitig mit einer mechanischen Schutzschicht beschichtet ist, eingelegt und es erfolgt anschließend im Mehrkomponentenspritzgießverfahren das Angießen optisch transparenter Koppel- und Lichtführungselemente aus einem optisch transparenten Polymer und das Umspritzen mindestens der transparenten Folie zu einer fertigen Gehäuseform.

Mit dem Verfahren lassen sich die Vorteile von spritzgegossenen Schaltungsträgern mit den Vorteilen einer direkten optischen Datenübertragung verbinden und so kostengünstig Baugruppen mit geringer elektromagnetischer Störanfälligkeit herstellen. Die Datenübertragungsrate kann gegenüber rein elektrischer Datenverarbeitung erhöht werden. Außerdem eröffnet das Verfahren neue gestalterische Möglichkeiten.

Die transparente Folie kann strukturiert sein (Multimode-Wellenleiter), wenn eine größere Datenmenge zu übertragen ist. Sie kann auch unstrukturiert sein, wo nur einfache Lichtleitfunktionen (Sensoren, z. B. Lichtschranken) zu erfüllen sind.

In jedem Fall wird die Folie durch eine beidseitige Beschichtung vor mechanischen Beschädigungen geschützt.

Die Folien können Justagemarken aufweisen, um ihre Justage beim Aufbringen auf die Oberfläche des Gehäuserohlings zu erleichtern.

Strukturierte Wellenleiter-Folie besteht aus einer Kernschicht (core) und jeweils einer Mantelschicht (cladding) auf jeder Seite. Die Wellenleiterfunktion entsteht durch Strukturierung der Core-Lage, die auf eine untere Cladding-Lage aufgebracht ist. Anschließend erfolgt das Aufbringen der oberen, abschließenden Cladding-Lage. Das gesamte System wird dann zusätzlich, wie bereits gesagt, durch beidseits aufgebrachte Beschichtungen mechanisch geschützt. Die Strukturierung der Core-Lage kann z. B. durch reaktives Ionenätzen mittels Metall- oder Photomasken erfolgen.

Im Gehäuseteil werden beim Spritzgießen Koppelelemente wie optische Stecker, Einkoppelelemente für Sende- und Empfangsbauelemente und einfache Lichtführungselemente wie Umlenkspiegel oder -prismen, Linsen etc. integriert. Die Koppel- und Lichtführungselemente werden aus einem optisch transparenten Polymer gespritzt.

Die Erfindung soll nachstehend anhand eines Ausführungsbeispiels näher erläutert werden. In den zugehörigen Zeichnungen zeigen
- Fig. 1: ein nach dem Verfahren hergestelltes Bauteil für ein Fensterheber-Bedienteil eines Autos und
- Fig. 2: die Lichtleitung in einem verfahrensgemäß hergestellten Gehäuseteil.

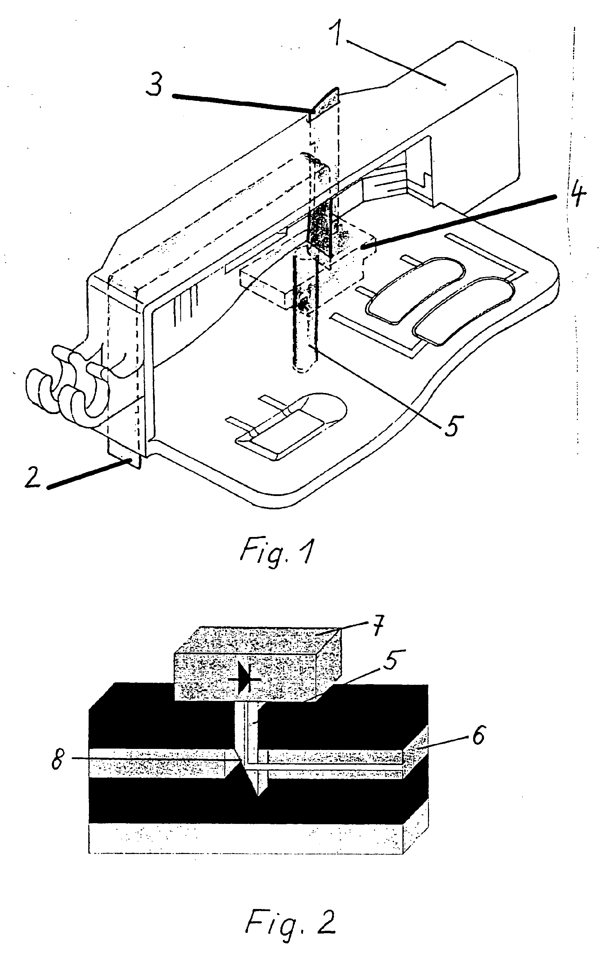

Fig. 1 zeigt ein zu einem multifunktionalen Bedienteil eines Fensterhebers gehörendes Gehäuseteil 1. In das Gehäuseteil 1 sind optisch transparente Folienstreifen 2, 3 mittels des erfindungsgemäßen Verfahrens eingebracht. Folienstreifen 2 dient als Sensor (Lichtschranke) für eine Verriegelungsdetektierung des Türschlosses, Folienstreifen 3 als Sensor in der Fensterglasebene für einen Klemmschutz bei geöffnetem Fenster bzw. für eine Diebstahlsicherung bei geschlossenem Fenster und abgeschlossenem Fahrzeug. Ein Lichtstrahl im Folienstreifen 3 wird durch die abgerundete Form des Folienendes über die Fensterbreite aufgefächert.

Im Mehrkomponentenspritzgießverfahren mit eingegossen wurde ein optischer Stecker 4, der einerseits mit den Folienstreifen 2, 3 kommuniziert und andererseits mit einem Lichtleiter 5, der die Verbindung zu weiteren Bauteilen herstellt.

Das Gehäuseteil 1 wird hergestellt, indem in einen spritzgegossenen Rohling, der bereits die äußere Kontur des Gehäuseteils 1 aufweist, zunächst die Folienstreifen 2 und 3 eingelegt werden. Anschließend wird der Stecker 4 angegossen und es erfolgt ein Fertigguß zu dem endgültigen Gehäuseteil , wobei die Folienstreifen 2, 3 von der abschließenden Gußlage fixiert und bedeckt werden.

Fig. 2 zeigt die Lichtleitung in einem Gehäuseteil in einem angegossenen transparenten Polymer-Lichtführungselement 5 sowie in einem Folienstreifen 6. Das Licht gelangt von einer Leuchtdiode 7 als Sender über ein Umlenkprisma 8 in die planaren Wellenleiter des Folienstreifens 6. Die elektrische Kontaktierung der Leuchtdiode 7 kann durch hier nicht gezeigte Leiterbahnen in der Oberfläche des Gehäuseteils erfolgen.

## Patentansprüche

1. Verfahren zur Herstellung von Lichtleitpfaden in spritzgegossenen Gehäuseteilen (1), wobei in einen Gehäuserohling eine optisch transparente Folie (2, 3, 6), die beidseitig mit einer Schutzschicht zum Schutz der Folie vor mechanischen Beschädigungen beschichtet ist, eingelegt wird und im Mehrkomponentenspritzgießverfahren das Angießen optisch transparenter Koppel- und Lichtführungselemente (5) aus einem optisch transparenten Polymer und das Umspritzen mindestens der transparenten Folie (2, 3, 6) zu einer fertigen Gehäuseform erfolgt, wobei die transparente Folie von einer abschließenden Gusslage des Gehäuseteils (1) fixiert und bedeckt wird.

2. Verfahren nach Anspruch 1,
**dadurch gekennzeichnet , dass** der Gehäuserohling spritzgegossen wird.

3. Verfahren nach Anspruch 1 oder 2,
**dadurch gekennzeichnet , dass** eine strukturierte optisch transparente Folie (6) verwendet wird.

4. Verfahren nach Anspruch 3,
**dadurch gekennzeichnet , dass** die strukturierte Folie (6) mit einer Kernlage und beiderseitiger Mantellage hergestellt wird.

5. Verfahren nach Anspruch 4,
**dadurch gekennzeichnet , dass** die Strukturierung der Kernlage durch reaktives Ionenätzen mittels Metall- oder Photomasken erfolgt.

## Claims

1. Method for producing optical waveguide paths in injection-moulded housing parts (1), in which an optically transparent film (2, 3, 6) which is coated with a protective coat on both sides, in order to protect the film against mechanical damage, is placed in a housing preform and, by the multicomponent injection moulding method, optically transparent coupling and light guiding elements (5) of an optically transparent polymer are moulded on and moulding is carried out at least around the transparent film (2, 3, 6) in order to form a finished housing shape, the transparent film being fixed and covered by a subsequent encapsulation layer of the housing part (1).

2. Method according to Claim 1, **characterized in that** the housing preform is injection moulded.

3. Method according to Claim 1 or 2, **characterized in that** a structured optically transparent film (6) is used.

4. Method according to Claim 3, **characterized in that** the structured film (6) is produced with a core layer and a cladding layer on each side.

5. Method according to Claim 4, **characterized in that** the core layer is structured using reactive ion etching by means of metal masks or photomasks.

## Revendications

1. Procédé de production de trajets de guidage de la lumière dans des pièces (1) de boîtier moulées par injection, dans lequel on met dans une ébauche de boîtier une feuille (2, 3, 6) transparente optiquement et revêtue sur les deux faces d'une couche de protection de la feuille vis-à-vis de dommages mécaniques et on effectue, par un procédé de moulage par injection à plusieurs composants, la coulée d'éléments (5) transparents optiquement de couplage et de guidage de la lumière en un polymère transparent optiquement et l'encastrement par injection d'au moins la feuille (2, 3, 6) transparente en une forme de boîtier fini, la feuille transparente étant immobilisée et revêtue d'une couche de coulée de fermeture de la partie (1) de boîtier.

2. Procédé suivant la revendication 1, **caractérisé en ce que** l'on moule par injection l'ébauche de boîtier.

3. Procédé suivant la revendication 1 ou 2, **caractérisé en ce que** l'on utilise une feuille (6) transparente optiquement qui est structurée.

4. Procédé suivant la revendication 3, **caractérisé en ce que** l'on produit la feuille (6) structurée ayant une couche d'âme et des couches d'enveloppe des deux côtés.

5. Procédé suivant la revendication 4, **caractérisé en ce que** l'on effectue la structuration de la couche d'âme par attaque ionique réactive au moyen de masque métallique ou de photomasques.
